# EUROPEAN PATENT APPLICATION

(11) **EP 3 693 417 A1**
(43) Date of publication of application: **12.08.2020**
(21) Application number: 20154917.7
(22) Date of filing: 31.01.2020
(51) Int. Cl.: C09D 5/00, C09K 19/00

(54) **RESPONSIVE COATING**

(30) Priority: 11.02.2019 EP 19156530
(71) Applicant: Fresh Strips B.V., 5656 AE Eindhoven (NL)
(72) Inventor: NICKMANS, Koen, 5631 MD Eindhoven (NL); VAN DER HEIJDEN, Danielle Anna Catharina, 5708 AG Helmond (NL)
(74) Representative: CPW GmbH

(57) **Abstract**

Coating comprising CLC particles and a secondary polymer, wherein the CLC particles have a T_{g,CLC} and the second polymer has a T_{g,P}, characterized in that T_{g,CLC} is equal to or lower than T_{g,P} and at least the CLC particles are deformed. The coating is able to give an optical response to an appearance of a certain environmental change, e.g. temperature or moisture.

## Description

The invention pertains to a coating, a method of manufacturing and the use of such a coating.

In logistics, e.g. transport and storage, numerous goods demands cooling to be protected against spoiling, aging and/or decomposition. The needed temperature in the cooling is substantially depending on the transported good. Frozen food needs a temperature of -18 °C or lower, fresh meet demands at most 4 °C, milk and milk products have to be stored at 4 to 8 °C and chocolate demands a temperature about 15 to 18 °C.

Also several medicinal goods such as vaccines, blood bags, infusions, bacterial cultures or pharmaceuticals demands cooling, as well as chemical reagents.

Therefore, in logistics a cold chain was established to guarantee that the temperature sensitive goods are cooled at the demanded temperature during the whole logistical process.

To guarantee that the cold chain was not broken, the temperature has to be monitored permanently.

For monitoring the temperature a variety of electronical sensors are on the market, which can serve as time-temperature integrators. These electronical sensors typically cost more than 1 €/sensor and are far too expensive for broad application, such as on packaging of food, medicine and/or chemicals.

Also analogous time-temperature integrators are on the market, but these integrators are generally multiple layer devices making them more expensive.

An alternative are battery-free optical time-temperature indicators that are comprised of a coating of cholesteric liquid crystalline (CLC) polymer. The helical pitch of the cholesteric liquid crystals causes these materials to exhibit a structural color. When mechanical compression is performed on the coating of CLC polymer network above its glass transition temperature (T_{g}), the cholesteric helices are compressed, which induces a color change. When the polymer network is cooled during compression (below T_{g}), glass formation occurs thereby locking in the color in a temporary state upon removing the compressive stress. Shape recovery occurs only when the deformed coating of CLC polymer network is heated above its T_{g}, which is accompanied by an irreversible optical response. When heated, the mechanically compressed coating of CLC polymer network can act as a time-temperature integrator (TTI), with the transition centered at the T_{g} of the CLC polymer network. The kinetics of the shape recovery are temperature dependent, and the rate of recovery increases with increasing temperature.

WO 2018/033595 discloses a photonic time-temperature sensor consisting of an coated and embossed interpenetrating network of a CLC polymer and a secondary polymer, wherein the photonic time-temperature sensor has a broad T_{g}. Due to the broad T_{g}, the photonic time-temperature sensor changes the color at desired temperature ranges slowly and/or by small changes in wavelengths, which are not directly apparent to the naked eye.

US 6,671,031 discloses a method for manufacturing a polarization diffraction film comprising liquid crystal material comprising a liquid crystal polymer and a cross linkable substance. These polymer are fixed in cholesteric alignment.

However, there are some difficulties associated with the use of planar liquid crystal (LC) films for the production of time-temperature sensors. First, the reflected wavelength in Bragg-reflection based optics is angle dependent, which results in the appearance of a different color when viewed at a different angle. Second, the optical properties are dependent on the coating conditions, and often so-called alignment layers are needed to control the alignment of the LCs. Third, modification of the time-temperature response profile is not trivial since it requires modification of the liquid crystal formulation, where the phase behavior and optical properties are sensitive to changes.

The object of the present invention is to provide a coating, which is able to overcome the deficiencies of the prior art and is cheap in production.

The object is solved by a coating comprising CLC particles and a secondary polymer, wherein the CLC particles have a glass transition temperature T_{g,CLC} and the second polymer has a glass transition temperature T_{g,P}, characterized in that T_{g,CLC} is equal to or less than T_{g,P} and at least the CLC particles are deformed.

T_{g,CLC} and T_{g,P} can be determined by differential scanning calorimetry (DSC). A DSC measurment is typically conducted by cooling the polymeric sample with a speed of 10 K/min and than heating the sample with the same speed. Thereby, the energy release is measured, and the T_{g} can be defined as an inflection point in the change in heat capacity of the material upon heating. This method is discribed in more detail in ISO 11357-1:2016

CLC particles, manufactured according to WO 2015/120950 A1, have the advantage, that the reflected wavelengths are not angle dependent.

Surprisingly, CLC particles are conducive to deformation by compression/stretching above their T_{g,CLC} resulting in a color shift. Upon heating above T_{g,CLC} the color shift can return to that of the uncompressed state (shape memory effect), thus, the CLC particles can act as time-temperature sensors.

Within the scope of the invention, "deformed" CLC particles have to be understood as CLC particles which have a change in their molecular geometry. This change can be a disturbance of the molecular orientation, arrangement, and/or position compared to the original order before compressing and/or stretching the CLC particle. Further this disturbance can be a disturbed order on the level of the CLC particle such that the original helical order of the CLC particle is disturbed by changing the molecular geometry due to compressing and/or stretching.

In a preferred embodiment, coatings comprising CLC particles and a secondary polymer resulting in films with low viewing-angle dependency.

Surprisingly, if a secondary polymer is selected with T_{g,P} that exceeded T_{g,CLC}, the higher T_{g,P} dominates the behavior of shape recovery and color shift. Therefore, the response of the coating can be programmed by tuning T_{g,P} of the secondary polymer alone, which simplifies the fabrication process of such a coating.

This can have the effect that a secondary polymer having a T_{g,P} > T_{g,CLC}, which is exposed to a temperature equal to or higher than T_{g,P}, loses its rigid structure. Subsequently, the compressed CLC particles can be released into their uncompressed state (memory shape effect), which leads to a color shift. Thus, the coating can act as a time-temperature integrator.

The advantage of the coating comprising the CLC particles and the secondary polymer is that the response, i.e. a color change, is only tunable by T_{g,P} and the coating is fabricated without the need for an alignment layer.

In a preferred embodiment, T_{g,CLC} is lower than T_{g,P}, wherein a difference between T_{g,CLC} and T_{g,P} is at least 2 °C, preferably at least 5 °C, more preferably at least 8 °C, even more preferably at least 10 °C, and most preferably at least 15 °C.

In a further preferred embodiment, T_{g,CLC} is lower than T_{G,P}, wherein a difference between T_{g,CLC} and T_{g,P} is at most 50 °C, preferably at most 40 °C, more preferably at most 30 °C, even more preferably at most 25 °C, and most preferably at most 20 °C.

The secondary polymer can comprise a composition of different monomers, oligomers and/or reactive polymers. Preferably, the secondary polymer is selected from a group comprising polyamides such as polyamide 6,6, and polyacrylates, polymethacrylates, poly epoxides, poly oxetanes, poly siloxanes such as poly(dimethyl siloxanes), and copolymers, mixtures and/or combinations thereof.

In another preferred embodiment, T_{g,P} can be lowered by the exposure to one or more of the items selected from the group comprising humidity and water, irradiation, organic vapors, amines, metal ions, pH-values, and chemical gases such as ammonia, carbon dioxide, carbon monoxide, or oxygen.

A property of the secondary polymer, which has also a T_{g,P}, which is higher than T_{g,CLC}, can be that the secondary polymer is sensitive against one or more items selected from the group mentioned above. The effect could be that after the CLC particles in the secondary polymer are compressed and locked in this state by the secondary polymer, T_{g,P} can be lowered by exposure to one or more of the above mentioned items, e.g. humidity. Thus, if the lowered T_{g,P} reaches an critical temperature (such as an environmental temperature of storage, e.g. in a refrigerator at about 8 °C) the secondary polymer loses its rigid structure and the compressed CLC particles can be released into their uncompressed state (shape memory effect). This is accompanied by a color shift and means that these materials can act as an optical responsive coating for the appearance of one or more of the above mentioned items.

In a preferred embodiment, T_{g,CLC} is less than 70 °C, preferably less than 50 °C, more preferably less than 30 °C, even more preferably of less than 10 °C, most preferably of less than -10 °C.

In another preferred embodiment, the coating comprises an amount of CLC particles of 5 % to 95 %, preferably of 20 % to 90 %, more preferably of 40 % to 80 %, and even more preferably of 50 % to 70 %.

CLC particles can be obtained from Merck, which can be produced according to WO 2015/120950 A1.

The CLC particles have a size in the range of 0.1 to 20.0 µm, the size is preferably monodisperse.

The size of the CLC particles are determined by photon correlation spectroscopy of non aqueous particle dispersion by a common apparatus such as a Malvern NanoZS particle analyzer, or by electron microscopy and image analysis.

In a preferred embodiment, the CLC particles have a size of at least 0.15 µm, preferably of at least 0.2 µm, more preferably of at least 0.25 µm, and most preferably of at least 0.3 µm.

In another preferred embodiment, the CLC particles have a size of at most 15.0 µm, preferably of at most 10.0 µm, more preferably of at most 8.0 µm, even more preferably of at most 7.0 µm, and most preferably of at most 5.0 µm.

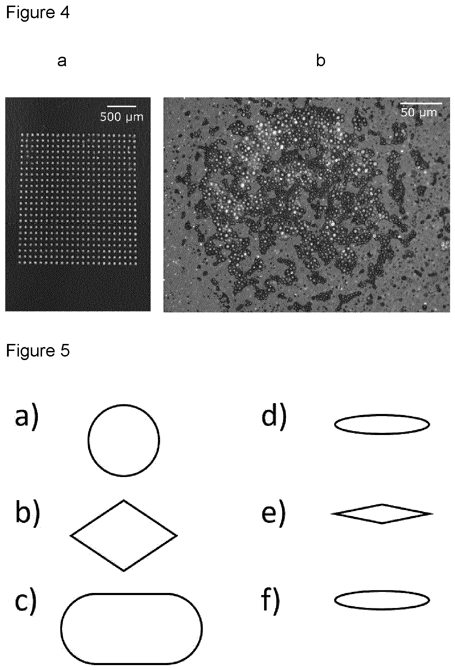

The CLC particles can have a three-dimensional structure, wherein the CLC particles have a disc like structure. The disc like structure can be circular (Fig. 5a), quadrangular (Fig. 5b), or linear extended circular (Fig. 5c). This disc like structure lays in a plane of length and width of the CLC particles, wherin the length and the width are the largest and/or second largest dimension of the CLC particles.

In this context, linear extended circular structure means a circle which is cut into to equal parts, which are linear extended, thus, the boundaries of the extension are parallel to each other.

Further, the thickness of the particles is the third largest dimension. In case of a circular and a streched circular disk shape of the CLC particles, the thickness of the CLC particles is at the edge of the shapes smaller than in the center of the shape. The side view of such a CLC particle shows an elliptical thickness distribution of the CLC particles (Fig. 5d and 5f). In case of a quadrangular disk shape, the thickness is also at the edges smaller than in the center of the CLC particles, the thickness distribution of such a CLC particle is formed quadrangular (Fig. 5e).

The object of the present invention is also solved by a method of manufacturing the coating:
Method of manufacturing a coating by comprising the following steps:
a. dispersing CLC particles in a polymeric binder,
b. printing the dispersion on a substrate,
c. converting the polymeric binder into a secondary polymer by polymerization, wherein the CLC particles have a T_{g,CLC} and the secondary polymer has a T_{g,P}, characterized in that T_{g,CLC} is equal to or less than to T_{g,P}, ,
d. mechanical compressing of the polymerized dispersion at a temperature above T_{g,P} of the secondary polymer,
e. cooling the mechanically compressed coating to a temperature below T_{g,P}.

The CLC particles can be provided according to WO 2015/120950 A1 and dispersed in polymeric binder.

In a preferred embodiment, the mechanical compression is performed above T_{g,P} using a hot-embossing stamp (e.g. 80 °C, 30s, 6 bar).

Preferably, in step a. additives such as photo initiator, levelling agents, and/or solvents are dispersed in the secondary polymer.

In a preferred embodiment, after step b and/or step c volatile components of the polymeric binder are removed. Such volatile components can be solvents, water, moisture or condensates.

To a person skilled in the art numerous of suitable printing techniques are known, but preferred techniques for printing the coating according to the invention are shown below.

In a preferred embodiment, the printing in step c is performed by using conventional LC processing techniques such as flexography, gravure printing, inkjet printing, slit-die coating or screen printing, preferably the printing is performed by screen printing.

The polymerization in step c can beinduced by UV-light, heat, radical initiator and/or catalysts, preferably the polymerization is induced by UV-light.

In an embodiment, the dispersion is printed on a substrate as a continuous layer or in an array of elements.

Several suitable substrates can be used to print the coating on, e.g. metal, plastic, glass, minerals having a printable surface.

Preferably, the printed substrate is a plastic substrate.

Use of the coating as described by the aforementioned embodiments as a coating on substrates comprising sensitive goods such as food, medicine, chemicals.

The effect of such a coating on packaging is that the coating can indicate if the packaging, in particular the sensitive good, was exposed to an environment the good is sensitive against. Such an environment can be heat and/or humidity.

By indicating if the good was exposed to such an environment, it can be easier to control and evaluate the quality at the good, such as that the food can be consumed, the medicine can be taken up by a human, or the chemical can be used harmlessly.

The following figures and examples have to be understand as embodiments of the invention and not as limiting features of the invention.
**Figure 1****:** Photograph of a coating (a), microscope image in reflection mode (b), and corresponding reflectivity spectrum.
**Figure 2****:** Temperature response of a coating.
**Figure 3****:** Photonic memory effect of a coating with low CLC particle loading (5 wt.%). a) microscope image after compression, b) microscope image after heating, c) reflectivity measurements after coating, after compression, and after heating.
**Figure 4****:** Flexographic printing of CLC particles. a) photographic image of CLC particles printed in a dot raster pattern, b) microscope image of a single dot.
**Figure 5****:** Possible schematic structure of CLC particles; a) circular shape; b) quadrangular shape; c) linear extended circular.

### Figure 6:

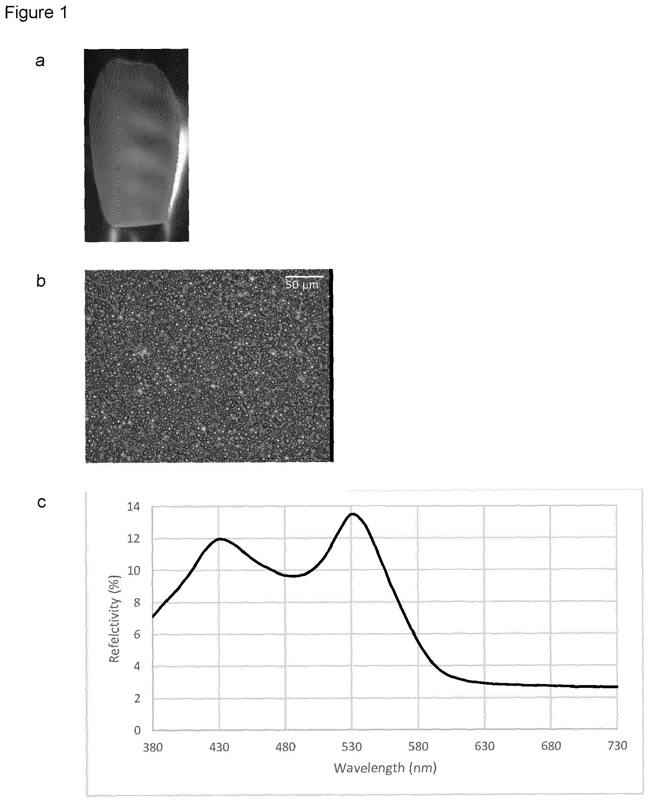

In Figure 1 a photograph (Fig. 1a) and a microscopic image (Fig. 1b) of a coating can be seen (Fig. 1a). The reflectivity spectrum is shown in Figure 1c.

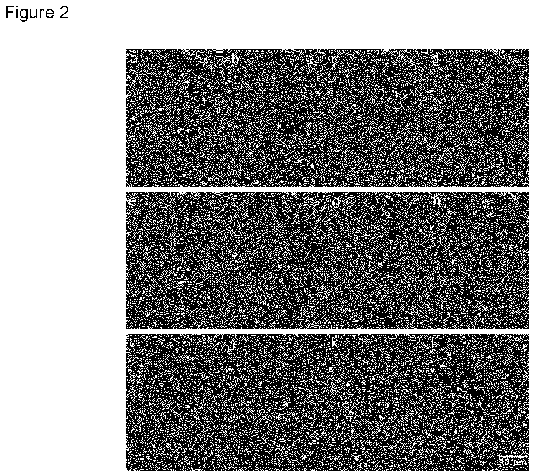

Figure 2 shows the temperature response of a compressedcoating comprising 5 wt.% of CLC particles, also by heating the coating every 30 min by 10 °C. The color re-shift from blue to green can be seen at 80 to 90 °C (Fig. 2 i/j). In detail the Figures a) to I) show the coating a) after embossing (110 °C, 30 seconds at 6 bar), b) 5 min at 50 °C, c) 30 min at 50 °C, d) 5 min at 60 °C, e) 30 min at 60 °C, f) 5 min at 70 °C, g) 30 min at 70 °C, h) 5 min at 80 °C, i) 30 min at 80 °C, j) 5 min at 90 °C, k) 30 min at 90 °C and I) heated to 120 °C.

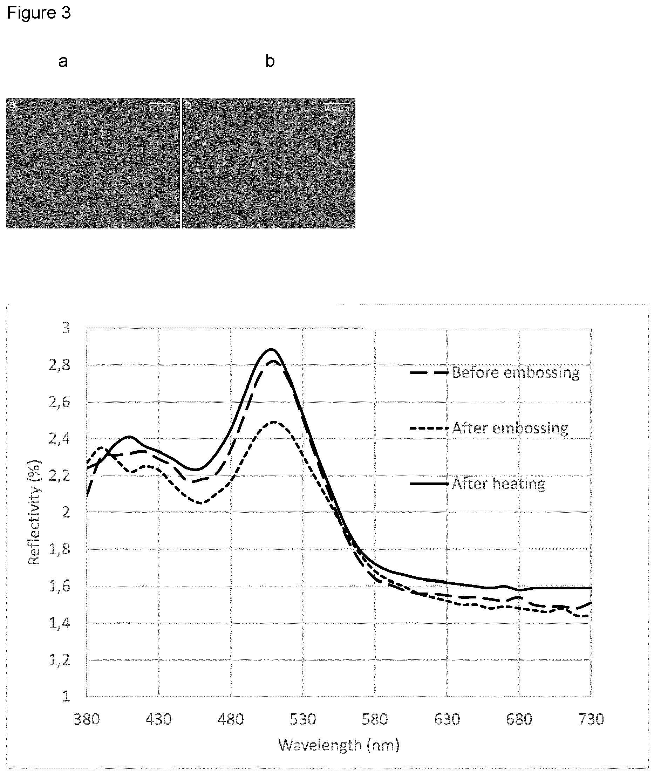

Figure 3 shows the photonic memory effect of a microscope image of a coating comprising 5 wt.% of CLC particles after compression (Fig. 3a) and after heating (Fig. 3b) as well as the reflectivity spectrum of the coating before compression, after compression and after heating of the compressed coating.

Figure 4 shows a photograph of a flexographic printing of CLC particles (Fig. 4a) in a dot raster pattern and a photographic image of a single dot (Fig. 4b).

Figure 5 shows possible structure of CLC particles, wherein Figure 5a shows the top view of a circular shaped CLC particle and Figure 5d the corresponding side view. Figure 5b shows the top view of a quadrangular shaped CLC particle and Figure 5e the corresponding sideview and at least Figure 5c shows the top view of a linear extended circular CLC particles and Figure 5f shows the corresponding side view.

### Comparative Example 1

Comparative Example 1 refers to an example in figure 10 of a publication in the Journal of Materials Chemistry C (E. Beltran-Garcia, O.L. Parri, J. Mater. Chem. C. 2015, 3, 11335-11340). This figure shows the viewing angle dependency of a CLC film comprising the interpenetrated network according to WO 2018/033595. At a viewing angle nearly perpendicular to the surface, the color of the CLC film appears green (middle right micrograph), and at a viewing angle from the left side (left right micrograph) or from the right side (right right micrograph) the color of the CLC film appears blue.

### Comparative Example 2

Comparative Example 2 refers to an Example shown in an article of the ACS Applied Materials & Interfaces (M. Moirangthem et al., ACS Appl. Mater. Interfaces 2017, 9, 32161-32167). Figure 2b shows a CLC film comprising the interpenetrated network, which was embossed according to WO 2018/033595. The embossed CLC film is than subsequently kept temperature of 0 °C, 8 °C, 20 °C, 25 °C, 35 °C and 55 °C for 7 hours each. The micrographs of figure 2b shows, that the color change occurs over a broad temperature range (8°C to 35 °C) and over a long period of time i.e. at least 28 hours (from 8 °C to 55 °C).

### Example 1

A coating was fabricated consisting of CLC particles and a UV-curable acrylic binder. To illustrate the effect of the binder on the time-temperature response, a mono-acrylic binder (DSM) was selected with a high T_{g,P} (90 °C), in combination with a di-acrylic cross-linker (DSM) to enable the shape memory effect. Following the dispersion of CLC particles (50 wt.%) in the binder, the coating was coated with the assistant of a solvent, and UV-cured. This results in an even coating (Figure 1a), with an even dispersion on the microscopic level (Figure 1b). Using a colorimeter a reflectivity spectrum was obtained which consists of two bands centered at 530 and 430 nm, which corresponds to the green and blue CLC particles respectively (Figure 1c). Some communication effects may also be present.

### Example 2

The coating of Example 1 was compressed (110 °C, 30 seconds at 6 bar), and subsequently heated in a temperature ramp (+10°C every 30 mins), while observed under the microscope. A small color change was detected after 30 minutes at 80 °C (Figure 2i). At 90 °C, the color changed more rapidly, with a distinct color change occurring after 5 minutes (Figure 2j). After 30 minutes at 90 °C, the sample had essentially returned to the uncompressed state (Figure 2k). Comparative Example 2 on neat particles. This observation suggests that at temperatures below T_{g,P}, the glassy secondary polymer is prohibiting CLC particles to return to their original shape. It further suggests that by changing the mechanical properties of the binder the photonic memory effect can be controlled, thereby largely decoupling the optical (LC) and thermal response characteristics.

### Example 3

In order to allow compression over larger areas, coatings were prepared to contain fewer CLC particles (5 w.t. %). Compression of these responsive coatings resulted in an even color change across the stamp dimensions (Figure 3a) and an even recovery (Figure 3b). Prior to compression, the reflectivity spectrum consist of two bands centered at 510 and 410 nm (Figure 4c) which is similar to the coating with high CLC particle loading (Figure 1). After compression, the reflection intensity at 510 nm is decreased, corresponding to the observation of the disappearance of green-reflecting CLC particles under the microscope. A third peak appears at 390 nm, which may correspond to the compressed blue particles. After heating, the reflectivity spectrum returns to its original shape, further indicating the reversibility of the photonic memory effect.

### Example 4

The manufacturing of low cost coatings is potentially facilitated if printing procedures can be introduced in combination with flexible substrates and roll-to-roll processing. To this end, flexographic printing (IGT F1) was used to deposit CLC particles on a black flexible substrate, polyethylene terephthalate (PET). A photopolymer containing a raster pattern was employed for the printing, resulting in an array of reflective printed dots over large areas (Figure 4a). Observation by microscope (Figure 4b) reveals transfer of the CLC particles onto the substrate demonstrating the feasibility of the approach for roll-to-roll fabrication. These initial printing experiments open up exciting avenues for the production of time-temperature integrator labels based on CLC particulate films.

## Claims

1. Coating comprising CLC particles and a secondary polymer, wherein the CLC particles have a glass transition temperature T_{g,CLC} and the second polymer has a glass transition temperature T_{g,P}, **characterized in that** T_{g,CLC} is equal to or lower than T_{g,P} and at least the CLC particles are deformed.

2. The coating according to claim 1, **characterized in that** T_{g,CLC} is lower than T_{g,P}, wherein a difference between T_{g,CLC} and T_{g,P} is at least 2 °C, preferably at least 5 °C, more preferably at least 8 °C, even more preferably at least 10 °C, and most preferably at least 15 °C.

3. The coating according to claim 1 or 2, **characterized in that** the refractive indices of the CLC particles and the secondary polymer are matching each other.

4. The coating according to any of the preceding claims , **characterized in that** T_{g,P} is less than 70 °C, preferably less than 50 °C, more preferably less than 30 °C, even more preferably less than 10°C, and most preferably less than -10 °C.

5. The coating according to any of the preceding claims, **characterized in that** the coating comprises an amount of CLC particles of 5 % to 95 %, preferably of 20 % to 90 %, more preferably of 40 % to 80 %, and even more preferably of 50 % to 70 %.

6. The coating according to any of the preceding claims, **characterized in that** the CLC particles have a diameter from 0.1 to 20.0 µm, preferably from 0.15 to 15.0 µm, more preferably of 0.2 to 10.0 µm, even more preferably between 0.25 and 8.0 µm, and most preferably between 0.3 and 7.0 µm.

7. The coating according to any of the preceding claims, **characterized in that** T_{g,P} can be lowered by one or more items selected from a group comprising humidity and water, irradiation, organic vapors, amines, metal ions, pH-values, and chemical gases such as ammonia, carbon dioxide, carbon monoxide, oxygen.

8. Method of manufacturing a coating comprising the following steps:
a. dispersing CLC particles in a polymeric binder,
b. printing the dispersion on a substrate,
c. converting the polymeric binder into a secondary polymer by polymerization, wherein the CLC particles have a T_{g,CLC} and the secondary polymer has a T_{g,P}, **characterized in that** T_{g,CLC} is equal to or less than to T_{g,P},
d. mechanical compressing of the polymerized dispersion at a temperature above T_{g,P} of the secondary polymer,
e. cooling the mechanically compressed coating to a temperature below T_{g,P}.

9. The method according to claim 9, **characterized in that** in step a. additives such as photo initiator, levelling agents, and/or solvents are dispersed in the secondary polymer.

10. The method according to claim 9 and 10, **characterized in that** after step b and/or step c volatile components of the polymeric binder are removed.

11. The method according to any of the claims 9 to 11, **characterized in that** the printing in step c is performed by using conventional LC processing techniques such as flexography, gravure printing, inkjet printing, slit-die coating or screen printing, preferably the printing is performed by screen printing.

12. The method according to any of the claims 9 to 12, **characterized in that** the polymerization in step c is induced by UV-light, heat, radical initiator and/or catalysts.

13. The method according to any of the claims 9 to 13, **characterized in that** the dispersion is printed on a substrate as a continuous layer or in an array of elements.

14. Use of the coating according to any of the preceding claims as a responsive coating on substrates comprising food, medicine, chemicals.
